# FASCICULE DE BREVET EUROPEEN

(11) **EP 2 570 996 B1**
(45) Date de publication et mention de la délivrance du brevet: **17.08.2016**
(21) Numéro de dépôt: 12183026.9
(22) Date de dépôt: 04.09.2012
(51) Int. Cl.: G06T 17/20, G06T 3/00, G06T 19/20

(54) **Procédé de détermination d'une surface externe d'une partie fémorale d'une prothèse de genou**
Verfahren zur Bestimmung einer externen Oberfläche eines Femoralteils einer Knieprothese
Method for determining an outer surface of a femoral portion of a knee prosthesis

(30) Priorité: 14.09.2011 FR 1158204
(43) Date de publication de la demande: 20.03.2013
(73) Titulaire: Anatomic, 13011 Marseille (FR)
(72) Inventeur: Borrione, Frédéric, 13011 MARSEILLE (FR); Roisin, Alain, 92430 MARNES LA COQUETTE (FR); Van Hille, William, 63960 VEYRE MONTON (FR); Yvroud, Michel, 57420 COIN LES CUVRY (FR); Peronne, Etienne, 63400 CHAMALIERES (FR); Piriou, Philippe, 95270 BELLOY EN FRANCE (FR); Guingand, Olivier, 75016 PARIS (FR); Oget, Vincent, 51100 REIMS (FR); Piton, Jean-Pierre, 57640 SANRY LES VIGY (FR); Lhotellier, Luc, 75012 PARIS (FR); Guyen, Olivier, 69003 LYON (FR)
(74) Mandataire: Chevalier, Renaud Philippe

(56) Documents cités:
- WO-A1-91/04544
- WO-A2-2011/158117
- US-A- 5 871 018
- US-A1- 2004 068 187
- GELAUDE F ET AL: "A contour-based segmentation algorithm to produce outer surface models for computer applications in bone reconstruction", JOURNAL OF BIOMECHANICS, PERGAMON PRESS, NEW YORK, NY, US, vol. 39, 1 janvier 2006 (2006-01-01), page S423, XP024982295, ISSN: 0021-9290, DOI: 10.1016/S0021-9290(06)84722-6 [extrait le 2006-01-01]

## Description

L'invention concerne un procédé de détermination d'une surface externe d'une partie fémorale d'une prothèse d'un genou. L'invention concerne également une partie fémorale d'une prothèse de genou dont la surface externe est déterminée par un tel procédé.

Pour la présente demande on se référera au système de référence anatomique classique dans lequel le patient est debout face à un observateur. Dans ce système de référence, il existe trois types principaux de plans : sagittal (c'est-à-dire parallèle au plan médian), transversal et frontal. Les termes de « médial » et de « latéral » sont définis à partir du plan médian, une structure médiale étant plus proche du plan médian qu'une structure latérale.

### ARRIERE PLAN TECHNOLOGIQUE DE L'INVENTION

Une pose d'une prothèse totale de genou vise à restaurer une articulation entre un fémur et un tibia d'un patient. Ladite prothèse doit reproduire le plus précisément possible le genou qu'elle remplace pour être portée sans douleur ni gêne par le patient. En outre, lorsque la prothèse est mal dessinée, une partie tibiale en polyéthylène de ladite prothèse s'use beaucoup plus rapidement. Il peut également arriver que la prothèse se fissure ou se casse. Le document US 5 871 018 décrit le préambule de la revendication 1

### OBJET DE L'INVENTION

Un but de l'invention est de proposer un procédé de détermination d'une surface externe d'une partie fémorale d'une prothèse de genou permettant de reproduire autant que possible l'extrémité distale d'un fémur que ladite partie fémorale va remplacer.

### BREVE DESCRIPTION DE L'INVENTION

En vue de la réalisation de ce but, on propose un procédé de détermination d'une surface externe d'une partie fémorale d'une prothèse d'un genou, le procédé de détermination comportant les étapes de :
- modéliser en trois dimensions l'extrémité distale d'un fémur associé au genou pour obtenir un modèle de ladite extrémité distale ;
- couper le modèle selon des plans passant tous par un axe commun proche d'un axe d'articulation instantané du genou ;
- dans chacun des plans, relever la trace de la surface externe de l'extrémité distale du fémur pour obtenir un faisceau de courbes directrices ;
- construire la surface externe par interpolation des courbes directrices.

En reproduisant l'extrémité distale du fémur d'un patient et en adaptant la surface externe de la partie fémorale directement à partir de ladite reproduction, il est ainsi possible de construire une partie fémorale imitant très précisément l'extrémité distale du fémur que la partie fémorale va remplacer.

Les inventeurs ont pu constater que l'étude de la surface de l'extrémité distale du fémur était fondamentale pour permettre à la prothèse de genou d'avoir un fonctionnement proche de celui dudit genou. Ainsi, l'articulation entre la partie fémorale, une partie tibiale de la prothèse de genou et une partie patellaire de la prothèse de genou s'avèrera très proche du genou natif et la prothèse totale de genou pourra être portée sans douleur par le patient.

L'invention porte également sur une partie fémorale d'une prothèse de genou dont la surface externe est déterminée selon le procédé que l'on vient de décrire.

### BREVE DESCRIPTION DES DESSINS

L'invention sera mieux comprise à la lumière de la description qui suit d'une mise en oeuvre particulière non limitative de l'invention en référence aux figures ci-jointes parmi lesquelles :
- la figure 1 est un schéma illustrant les différentes étapes du procédé de l'invention ;
- la figure 2 est une vue en trois dimensions d'une partie fémorale d'une prothèse de genou dont la surface externe est déterminée selon le procédé de l'invention, des traits de construction étant visibles ;
- la figure 3 est une vue de côté d'une partie fémorale d'une prothèse de genou dont la surface externe est déterminée selon le procédé de l'invention, des traits de construction étant visibles.

### DESCRIPTION DETAILLEE DE L'INVENTION

Le procédé de détermination d'une surface externe d'une partie fémorale d'une prothèse d'un genou selon l'invention est ici mis en oeuvre pour un genou droit. Cet exemple de mise en oeuvre n'est bien sûr pas limitatif.

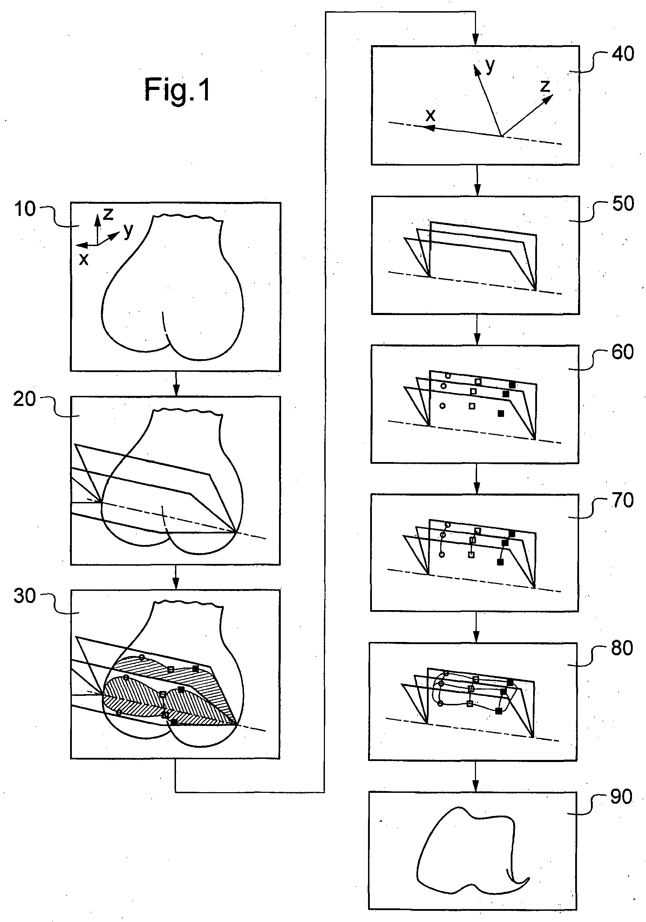

En référence à la figure 1, le procédé de détermination d'une surface externe d'une partie fémorale d'une prothèse d'un genou selon l'invention comporte une première série d'étapes qui consiste à étudier l'extrémité distale d'un fémur associé au genou. A cet effet, une première étape 10 du procédé consiste à modéliser en trois dimensions l'extrémité distale du fémur pour obtenir un modèle de ladite extrémité distale. La modélisation en trois dimensions peut être réalisée, par exemple, à partir d'une imagerie médicale d'un patient à qui on destine la prothèse comme une radio ou bien une Imagerie par Résonnance Magnétique (IRM) ou encore d'une imagerie issue d'une palpation sous système de navigation. Cette étape 10 étant bien connue de l'art antérieur, elle ne sera pas décrite plus en détail ici.

Dans une deuxième étape 20, le modèle est coupé selon des plans passant tous par un axe commun proche d'un axe d'articulation instantané du genou. De préférence, l'axe commun est un axe d'articulation de deux condyles de l'extrémité distale du fémur. Cet axe d'articulation a été mis en évidence pour la première fois dans l'article « Three-dimensional morphology of the distal part of the femur viewed in virtual reality » publié en 2005 dans The Journal of Bone and Joint Surgery. Ainsi, on détermine dans un premier temps l'axe d'articulation des deux condyles du modèle puis on découpe le modèle selon des plans passant par cet axe.

Enfin, dans une troisième étape 30, on relève différentes indications sur une morphologie de l'extrémité distale du fémur. En particulier, on relève au moins la trace d'une paroi externe de l'extrémité distale du fémur dans chacun des plans c'est-à-dire l'intersection de la paroi externe de l'extrémité distale du fémur avec chacun des plans. On relève ainsi un faisceau de courbes directrices représentatives d'une structure externe de l'extrémité distale du fémur.

Selon un mode de réalisation privilégié, lors de la troisième étape 30, on relève également sur chaque trace trois points représentatifs de la géométrie de la surface externe de l'extrémité distale du fémur : un premier point correspondant sensiblement à la position sur la trace d'une gorge trochléenne de l'extrémité distale du fémur, un deuxième point correspondant sensiblement à la position sur la trace d'un sommet d'une berge d'un condyle médial du fémur et un troisième point correspondant sensiblement à la position sur la trace d'un sommet d'une berge d'un condyle latéral du fémur.

Le procédé de détermination selon l'invention comporte ensuite une seconde série d'étapes pour la construction de la surface externe de la partie fémorale de la prothèse. A cet effet dans une quatrième étape 40, on crée un repère orthonormé, l'un des vecteurs du repère orthonormé ayant pour direction l'axe d'articulation de deux condyles de l'extrémité distale du fémur. De préférence, ledit vecteur est orienté vers le plan médian, un deuxième vecteur est orienté en direction antérieur et le troisième vecteur en direction proximale.

Lors de la cinquième étape 50, on positionne les différents plans selon lesquels le modèle a été coupé lors de la deuxième étape 20, lesdits plans étant positionnés notamment à partir de l'axe des deux condyles de l'extrémité distale du fémur.

Au cours de la sixième étape 60, on dispose sur chaque plan, les points relevés lors de la troisième étape 30 puis dans une septième étape 70 on relie les premiers points entre eux, les deuxièmes points entre eux et les troisièmes points entre eux pour obtenir trois courbes guides qui dessinent respectivement une gorge trochléenne de la surface externe, un sommet d'une berge d'un condyle médial et un sommet d'une berge d'un condyle latéral. Puis, lors d'une huitième étape 80, on dispose également sur chaque plan, les traces relevées à la troisième étape 30. Cette huitième étape 80 permet également de vérifier qu'il n'y a pas eu de problème de modélisation, les points relevés devant coïncider avec des points de la trace relevée pour chaque plan.

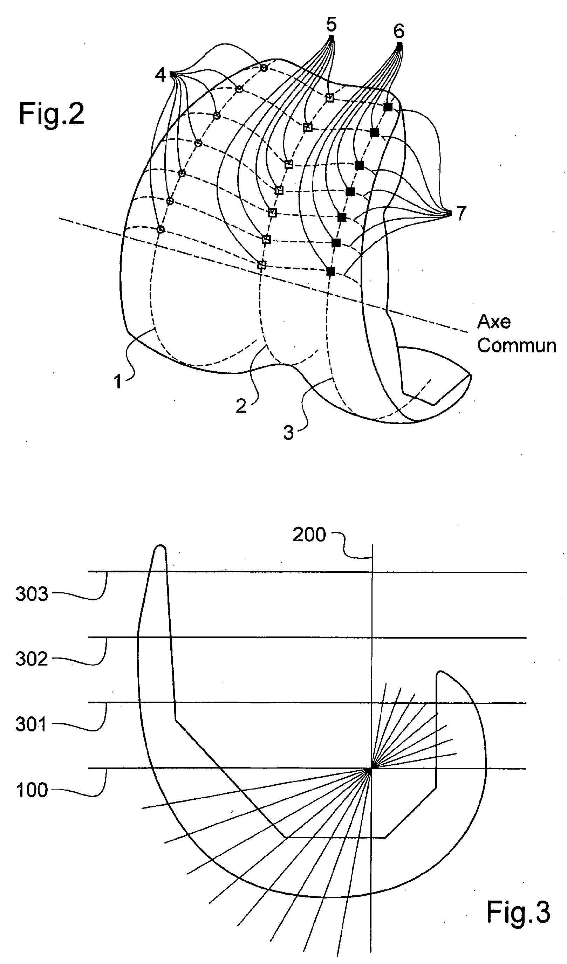

Les sixième, septième et huitième étapes 60, 70, 80 permettent ainsi de réaliser un quadrillage de la surface externe de la partie fémorale de la prothèse. A la figure 2, une partie du quadrillage est dessinée en pointillés. On distingue ainsi les courbes guides 1, 2, 3, une partie des trois séries de points 4, 5, 6 et une partie des courbes directrices 7.

Dans une dernière étape 90, on construit ladite surface externe par interpolation des courbes directrices et des courbes guides. La surface externe ainsi construite est adaptée au patient et permet dans un deuxième temps d'aboutir à la création d'une partie fémorale d'une prothèse de genou personnalisée. Ladite partie fémorale imitera très précisément l'extrémité distale du fémur que la partie fémorale va remplacer.

Un autre exemple de mise en oeuvre du procédé de l'invention est la détermination d'une surface externe d'une partie fémorale d'une prothèse de genou convenant à un grand nombre de personnes. A cet effet, pour chaque individu d'un échantillon de population on réalise les trois premières étapes 10, 20, 30 du procédé à savoir :
- modéliser en trois dimensions l'extrémité distale d'un fémur associé à un genou dudit individu pour obtenir un modèle de ladite extrémité distale ;
- couper le modèle selon des plans passant tous par un axe commun proche d'un axe d'articulation instantané du genou ;
- dans chacun des plans, relever la trace de la surface externe de l'extrémité distale du fémur.

A partir des traces relevées, on détermine un faisceau de courbes directrices moyennes. Puis, on construit la surface externe de la partie fémorale par interpolation des courbes directrices moyennes, ladite surface étant représentative de l'échantillon de population.

Ledit procédé pourra être mis en oeuvre pour plusieurs échantillons de population au sein d'une population globale afin de déterminer des surfaces externes de parties fémorales qui soient de tailles différentes.

Bien entendu l'invention n'est pas limitée à la mise en oeuvre décrite et on peut y apporter des variantes sans sortir du cadre de l'invention tel que défini par les revendications.

En particulier, toujours dans un souci d'adaptation de la surface externe de la partie fémorale à l'anatomie du patient, le procédé selon l'invention pourra comporter des étapes supplémentaires pour la construction de ladite surface externe. Par exemple, un chirurgien pourra intervenir entre la huitième étape 80 et la neuvième étape 90 pour modifier le quadrillage de la surface externe de la partie fémorale au vu de données annexes (issues par exemple d'une étude ligamentaire). Il pourra avoir également une étude plus complète de l'extrémité distale du fémur associée au genou. Par exemple, on pourra également relever un ou plusieurs ratios Antéro-Postérieur/ Médio-Latéral de l'extrémité distale du fémur, lesdits ratios étant employés pour créer le quadrillage de la surface externe de la partie fémorale. On peut également envisager de couper en outre le modèle selon des plans ne passant pas tous par l'axe commun. En référence à la figure 3, une partie fémorale de prothèse de genou dont la surface externe a été obtenue à partir du procédé de l'invention est illustrée. Pour créer cette partie fémorale, on a positionné dans un repère orthonormé les plans selon lesquels le modèle a été coupé. Le modèle a ainsi été coupé par un plan transverse 100 et un plan frontal 200 passant tous deux par l'axe commun. Huit autres plans passant par l'axe commun et s'étendant entre le plan transverse 100 et le plan frontal 200, ont également coupé le modèle. Trois plans parallèles 301, 302, 303 au plan transverse 100 et ne passant donc pas par l'axe commun ont aussi coupé le modèle. La surface externe de la partie a donc été déterminée à partir de dix plans passant tous par l'axe commun et de trois plans supplémentaires ne passant pas par l'axe commun.

Bien entendu, l'exemple illustré à la figure 3 n'est pas limitatif et on pourra couper le modèle selon un nombre de plans différents. Il va de soi que plus le nombre de plans de coupe est important plus la détermination de la surface externe de la partie fémorale sera semblable à l'extrémité distale du fémur du patient qu'elle remplace.

Par ailleurs, toutes les étapes décrites sont aussi bien applicables à la création d'une partie fémorale personnalisée qu'à une partie fémorale convenant à un grand nombre de personnes. Dans le cas de cette dernière application, la première série d'étapes 10, 20, 30 est réalisée pour un grand nombre de personnes. Lors d'une étape supplémentaire on étudie les différentes données relevées à la troisième étape 30 afin de choisir des valeurs qui conviendront audit grand nombre de personnes pour construire la surface externe de la partie fémorale.

Il pourra également être envisagé de construire la surface externe de la partie fémorale à partir d'une étude de parties fémorales de prothèse de genou déjà présentes sur le marché.

Bien qu'ici l'axe commun soit l'axe d'articulation des deux condyles de l'extrémité distale du fémur, on pourra dessiner les plans de coupe à partir d'un autre axe proche d'un axe d'articulation instantané du genou comme par exemple l'axe bi-condylien postérieur. L'axe commun pourra également être confondu avec l'axe d'articulation instantané du genou.

On pourra bien entendu dessiner les traces avant les points lors de la construction de la surface externe c'est-à-dire inverser les étapes 60, 70 avec l'étape 80.

Bien qu'ici on ait relevé traces et points, on pourra envisager de ne relever dans chacun des plans que la trace de la surface externe de l'extrémité distale du fémur pour obtenir un faisceau de courbes directrices et construire la surface externe par interpolation uniquement desdites courbes directrices.

## Revendications

1. Procédé mis en oeuvre par ordinateur de détermination d'une surface externe d'une partie fémorale d'une prothèse d'un genou, le procédé de détermination comportant les étapes de :
- modéliser (10) en trois dimensions l'extrémité distale d'un fémur associé au genou pour obtenir un modèle de ladite extrémité distale ; **caractérisé en ce que** les étapes suivantes sont exécutées
- couper le modèle (20) selon des plans passant tous par un axe commun proche d'un axe d'articulation instantané du genou ;
- dans chacun des plans, relever (30) la trace de la surface externe de l'extrémité distale dû fémur pour obtenir (80) un faisceau de courbes directrices ;
- construire (90) la surface externe par interpolation des courbes directrices.

2. Procédé de détermination selon la revendication 1, dans lequel :
- on répète les étapes de modélisation, de coupes et de relevage de traces pour chaque individu d'un échantillon de personnes ;
- on détermine un faisceau de courbes directrices moyennes ;
- on construit la surface externe de la partie fémorale par interpolation des courbes directrices moyennes, ladite surface étant représentative de l'échantillon de population.

3. Procédé de détermination selon la revendication 1, comportant en outre l'étape de relever (30) sur chaque trace un premier point correspondant sensiblement à la position sur la trace d'une gorge trochléenne de l'extrémité distale du fémur, un deuxième point correspondant sensiblement à la position sur la trace d'un sommet d'une berge d'un condyle médial de l'extrémité distale du fémur et un troisième point correspondant sensiblement à la position sur la trace d'un sommet d'une berge d'un condyle latéral de l'extrémité distale du fémur, et l'étape de relier les premiers points entre eux, les deuxièmes points entre eux et les troisièmes points entre eux pour obtenir (70) trois courbes guides.

4. Procédé de détermination selon la revendication 3, dans lequel on construit (90) la surface externe par interpolation des courbes directrices et des courbes guides.

5. Procédé de détermination selon la revendication 1, dans lequel on coupe le modèle selon au moins un plan transverse (100) et un plan frontal (200) passant tous deux par l'axe commun.

6. Procédé de détermination selon la revendication 5, dans lequel on coupe en outre le modèle selon au moins un plan parallèle (301, 302, 303) au plan transverse.

7. Procédé de détermination selon la revendication 1, dans lequel l'axe commun est un axe d'articulation de deux condyles de l'extrémité distale du fémur.

8. Partie fémorale d'une prothèse de genou dont la surface externe est déterminée à partir du procédé décrit à l'une des revendications précédentes.

## Patentansprüche

1. Von einem Computer durchgeführtes Verfahren zur Bestimmung einer Außenfläche eines Oberschenkelteils einer Knieprothese, wobei das Bestimmungsverfahren die folgenden Schritte umfasst:
- Dreidimensionales Modellieren (10) des distalen Endes eines Oberschenkels, der mit dem Knie verbunden ist, um ein Model des besagten distalen Endes zu erhalten; **dadurch gekennzeichnet, dass** die folgenden Schritte ausgeführt werden:
- Schneiden (20) des Modells gemäß Ebenen, die alle durch eine gemeinsame Achse nahe einer Momentangelenkachse des Knies verlaufen;
- in jeder der Ebenen Anheben (30) des Profils der Außenfläche des distalen Endes des Femurs, um ein Bündel von Leitkurven zu erhalten (80);
- Konstruieren (90) der Außenfläche durch Interpolation der Leitkurven.

2. Bestimmungsverfahren nach Anspruch 1, wobei:
- die Modellierungs-, Schnitt- und Profilanhebungsschritte für jede Einzelperson einer Stichprobe von Personen wiederholt werden;
- ein Bündel von mittleren Leitkurven bestimmt wird;
- die Außenfläche des Femurteils durch Interpolation der mittleren Leitkurven konstruiert wird, wobei die besagte Fläche repräsentativ für die Bevölkerungsstichprobe ist.

3. Bestimmungsverfahren nach Anspruch 1, das außerdem den Schritt des Anhebens (30) eines ersten Punkts, der im Wesentlichen der Position einer Trochleafurche des distalen Endes des Femurs auf dem Profil entspricht, eines zweiten Punkts, der im Wesentlichen der Position eines Scheitelpunkts eines Rands eines medialen Kondylus des distalen Endes des Femurs auf dem Profil entspricht, und eines dritten Punkts, der im Wesentlichen der Position eines Scheitelpunkts eines Rand eines lateralen Kondylus des distalen Endes des Femurs entspricht, auf jedem Profil und den Schritt des Verbindens der ersten Punkte miteinander, der zweiten Punkte miteinander und der dritten Punkte miteinander umfasst, um drei Führungskurven zu erhalten (70).

4. Bestimmungsverfahren nach Anspruch 3, wobei die Außenfläche durch Interpolation der Leitkurven und der Führungskurven konstruiert (90) wird.

5. Bestimmungsverfahren nach Anspruch 1, wobei das Modell gemäß mindestens einer Transversalebene (100) und einer Frontalebene (200) geschnitten wird, die alle beide durch die gemeinsame Ebene verlaufen.

6. Bestimmungsverfahren nach Anspruch 5, wobei außerdem das Modell gemäß mindestens einer zu der Transversalebene parallelen Ebene (301, 302, 303) geschnitten wird.

7. Bestimmungsverfahren nach Anspruch 1, wobei die gemeinsame Ebene eine Gelenkachse von zwei Kondylen des distalen Endes des Femurs ist.

8. Femurteil einer Knieprothese, dessen Außenfläche mit dem in einem der vorhergehenden Ansprüche beschriebenen Verfahren bestimmt wird.

## Claims

1. A computer-implemented method for determining an outer surface of a femoral portion of a knee prosthesis, the determination method including the steps of:
- modeling (10) in three dimensions the distal end of a femur associated with the knee in order to obtain a model of said distal end; **characterized in that** the following steps are carried out:
- cutting the pattern (20) along planes all passing through a common axis near an instantaneous joint axis of the knee;
- in each of the planes, picking up (30) the print of the outer surface of the distal end of the femur in order to obtain (80) a bundle of main curves;
- constructing (90) the outer surface by interpolation of the main curves.

2. The determination method according to claim 1, wherein:
- repeating the steps of modeling, cutting and picking up of prints for each individual from a sample of persons;
- determining a bundle of average main curves;
- constructing the outer surface of the femoral portion by interpolation of the average main curves, said surface being representative of the sample of population.

3. The determination method according to claim 1, further including the step (30) of picking up, on each print, a first point substantially corresponding to the position on the print of a trochlear groove of the distal end of the femur, a second point substantially corresponding to the position on the print of a top of a margin of a medial condyle of the distal end of the femur and a third point substantially corresponding to the position on the print of a top of a margin of a lateral condyle of the distal end of the femur, and the step of connecting the first points therebetween, the second points therebetween and the third points therebetween in order to obtain (70) three guide curves.

4. The determination method according to claim 3, wherein the outer surface is constructed (90) by interpolation of the main curves and the guide curves.

5. The determination method according to claim 1, wherein the pattern is cut along at least one transverse plane (100) and a front plane (200) both passing through the common axis.

6. The determination method according to claim 5, wherein the pattern is further cut along at least one plane parallel (301, 302, 303) to the transverse plane.

7. The determination method according to claim 1, wherein the common axis is a joint axis of two condyles of the distal end of the femur.

8. A femoral portion of a knee prosthesis whose outer surface is determined from the method described in any of the preceding claims.
